# FASCICULE DE BREVET EUROPEEN

(11) **EP 1 913 559 B1**
(45) Date de publication et mention de la délivrance du brevet: **19.10.2016**
(21) Numéro de dépôt: 06794317.5
(22) Date de dépôt: 09.08.2006
(51) Int. Cl.: G06T 19/00, H04N 21/235, H04N 21/81, H04N 13/00, G06T 15/00

(54) **PROCEDE ET DISPOSITIFS POUR VISUALISER UN MODELE NUMERIQUE DANS UN ENVIRONNEMENT REEL**
VERFAHREN UND EINRICHTUNGEN ZUM VISUALISIEREN EINES DIGITALEN MODELLS IN EINER REALEN UMGEBUNG
METHOD AND DEVICES FOR VISUALISING A DIGITAL MODEL IN A REAL ENVIRONMENT

(30) Priorité: 09.08.2005 FR 0552478; 09.08.2005 FR 0552473
(43) Date de publication de la demande: 23.04.2008
(73) Titulaire: Qualcomm Connected Experiences, Inc., San Diego, CA 92121 (US)
(72) Inventeur: LEFEVRE, Valentin, F-92800 Puteaux (FR); VAIDIE, Jean-Marie, F-75013 Paris (FR)
(74) Mandataire: Wagner & Geyer
(86) Numéro de dépôt international: PCT/FR2006/001935
(87) Numéro de publication internationale: WO 2007/017598

(56) Documents cités:
- US-A1- 2002 094 189
- GELENBE E ET AL: "Enabling simulation with augmented reality" PERFORMANCE TOOLS AND APPLICATIONS TO NETWORKED SYSTEMS. REVISED TUTORIAL LECTURES (LECTURE NOTES IN COMPUT. SCI. VOL.2965) SPRINGER-VERLAG BERLIN, GERMANY, 2004, pages 290-310, XP002416364 ISBN: 3-540-21945-5
- ANDREAS POMI AND PHILIPP SLUSALLEK: "Interactive Mixed Reality Rendering in a Distributed Ray Tracing Framework" IEEE AND ACM INTERNATIONAL SYMPOSIUM ON MIXED AND AUGMENTED REALITY ISMAR 2004, STUDENT COLLOQUIUM, [Online] 2 novembre 2004 (2004-11-02), XP002416365 Arlington, USA Extrait de l'Internet: URL:http://graphics.cs.uni-sb.de/Publicati ons/2004/MixedReality_ISMAR2004.pdf> [extrait le 2007-01-24]
- ONO S ET AL: "A photo-realistic driving simulation system for mixed-reality traffic experiment space" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, 6 juin 2005 (2005-06-06), pages 747-752, XP010833886 ISBN: 0-7803-8961-1
- SAITO H ET AL: "A match moving technique for merging CG and human video sequences" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 7 mai 2001 (2001-05-07), pages 1589-1592, XP010802890 ISBN: 0-7803-7041-4
- LEPETIT V ET AL: "Fully automated and stable registration for augmented reality applications" MIXED AND AUGMENTED REALITY, 2003. PROCEEDINGS. THE SECOND IEEE AND ACM INTERNATIONAL SYMPOSIUM ON 7-10 OCT. 2003, PISCATAWAY, NJ, USA,IEEE, 7 octobre 2003 (2003-10-07), pages 93-102, XP010662800 ISBN: 0-7695-2006-5
- POMI A ET AL: "Streaming video textures for mixed reality applications in interactive ray tracing environments", PROCEEDINGS ON VIRTUAL REALITY, MODELLING AND VISUALIZATION, XX, XX, 1 January 2003 (2003-01-01), pages 1-9, XP002366305,

## Description

La présente invention concerne la visualisation de modèles numériques et plus particulièrement un procédé et des dispositifs pour visualiser un modèle numérique dans un environnement réel.

Pour limiter les coûts et les temps de développement de produits, l'analyse des maquettes de ces produits a évolué du monde réel vers un monde virtuel. La visualisation d'une maquette réelle exige la fabrication de cette maquette. Pour des raisons de coûts et d'encombrement, les maquettes sont généralement réalisé à une échelle inférieure au produit final. Cependant, si cette maquette présente l'avantage de pouvoir manipuler une représentation réelle du produit et le placer dans un environnement réel, la différence d'échelle rend l'appréciation difficile. De plus, pour chaque maquette réelle, l'ajout d'enrichissements est une source de délais et de coûts importants et imprédictibles. Par exemple, un changement de modèle de phare sur une maquette réelle de véhicule nécessite la réalisation puis l'insertion du phare dans la maquette réelle. Aujourd'hui, dans l'industrie, de nombreux produits sont d'abord conçus et modélisés sur ordinateur. Avant sa fabrication le produit est virtuel et il est possible de le visualiser sous forme de maquette numérique. Une maquette numérique est une représentation en trois dimensions (3D) comprenant généralement les informations suivantes : des polygones, des textures et des matériaux. L'utilisation d'une maquette numérique offre de nombreux avantages. En particulier, chaque modification n'impose pas la réalisation d'une nouvelle maquette, réduisant les temps et les coûts de conception. La représentation d'une maquette est souvent réalisée à travers l'utilisation de projecteurs vidéo et d'écrans formant une salle immersive. Bien que l'image de synthèse générée pour visualiser le produit soit aussi proche que possible de la réalité, celui est extrait de son milieu réel et il est alors difficile de le comparer à des objets réels tels que les produits concurrents ou les produits liés à son environnement. Il existe donc un besoin d'optimiser la visualisation des modèles numériques.

Dans l'article intitulé « Enabling Simulation with Augmented Reality », M.C. Calzarossa and E. Gelenbe (Eds.), MASCOTS 2003, LNCS 2965, pp. 290-310, 2004, les auteurs décrivent une méthode pour insérer des objets virtuels, représentés de façon réaliste, dans une séquence vidéo représentant une scène réelle. La méthode décrite met notamment en oeuvre une étape de segmentation d'images.

L'invention permet de résoudre au moins un des problèmes exposés précédemment.

L'invention concerne un procédé pour visualiser en temps réel un objet virtuel selon la revendication 1. Des modes de réalisation préférés de l'invention sont décrits dans les revendications dépendantes.

La visualisation d'un objet virtuel dans un environnement réel permet d'évaluer cet objet dans son environnement réel tout en réduisant les délais et les coûts. La visualisation d'un objet virtuel dans un environnement réel permet également d'analyser facilement plusieurs variantes de cet objet.

Selon un mode particulier de réalisation, le procédé selon l'invention comprend une étape de réception d'un flux vidéo d'un second type permettant de déterminer dynamiquement les reflets de l'environnement réel sur l'objet virtuel. Le réalisme est ainsi augmenté par la gestion dynamique des mouvements de l'environnement réel sur la représentation de l'objet virtuel. En particulier, le flux vidéo d'un second type peut modifier la texture d'environnement de l'objet virtuel.

Toujours selon un mode de réalisation particulier, l'objet virtuel peut être une maquette numérique. La visualisation d'une maquette numérique dans un environnement réel permet d'évaluer cette maquette dans son environnement réel tout en réduisant les délais et les coûts. La visualisation d'une maquette numérique dans un environnement réel permet également d'analyser facilement plusieurs variantes de cette maquette.

Selon un mode particulier de l'invention, l'objet virtuel est un enrichissement virtuel d'une maquette réelle présente dans l'environnement réel. La visualisation d'enrichissements virtuels sur une maquette réelle permet d'étudier plusieurs variantes de ces enrichissements tout en réduisant les délais et les coûts.

Toujours selon un mode de réalisation particulier, le procédé selon l'invention comprend une étape de réception d'au moins un flux de données associé un flux vidéo compris dans le flux vidéo enrichi, ce flux de données caractérisant les mouvements de la source du flux vidéo associé, la représentation en deux dimensions de l'objet virtuel en trois dimensions étant inséré en temps réel dans le flux vidéo reçu selon le flux de données. Selon ce mode de réalisation, les caméras sont mobiles, permettant de visualiser l'objet virtuel dans un environnement réel selon un angle de vue dynamiquement variable.

Toujours selon un mode de réalisation particulier, l'objet virtuel est animé pour augmenter son réalisme et accroître les possibilités d'analyse de cet objet.

Selon un mode de réalisation particulier, le procédé selon l'invention comprend une étape d'insertion en temps réel d'un objet virtuel en deux dimensions dans le flux vidéo reçu pour comparer l'objet virtuel analysé à un autre objet virtuel. En particulier, cet objet en deux dimensions peut être une représentation d'un personnage réel.

Selon un mode de réalisation particulier, l'environnement réel comprend au moins un objet réel, le procédé selon l'invention comprenant une étape pour apparier une pluralité de points remarquable de l'objet réel avec les points correspondants d'un modèle virtuel de cet objet réel pour créer un lien spatial entre les objets réels et les objets virtuels. En particulier, le procédé selon l'invention peut comprendre une étape de localisation de la source du flux vidéo pour déterminer l'angle de vue des objets virtuels. Le procédé selon l'invention peut également comprendre une étape de mise à l'échelle des objets virtuels selon les objets réels.

L'invention a aussi pour objet un dispositif pour visualiser en temps réel un objet virtuel en trois dimensions dans un environnement réel, ce dispositif comprenant des moyens adaptés à la mise en oeuvre de chacune des étapes du procédé décrit précédemment.

L'invention a également pour objet un programme d'ordinateur comprenant des instructions adaptées à la mise en oeuvre de chacune des étapes du procédé décrit précédemment.

D'autres avantages, buts et caractéristiques de la présente invention ressortent de la description détaillée qui suit, faite à titre d'exemple non limitatif, au regard des dessins annexés dans lesquels :
- la figure 1 illustre de façon schématique le dispositif de la présente invention ; et,
- la figure 2 présente l'insertion de personnes dans la visualisation d'un modèle numérique dans un environnement réel.

Le procédé et les dispositifs selon l'invention permettent de mixer en temps réel les images d'un modèle numérique avec des images réelles de l'environnement du produit représenté par ce modèle afin de visualiser ce modèle dans son environnement réel appelé *showroom.* Le flux vidéo produit comprend le flux vidéo issu de sources telles que des caméras filmant le showroom auquel est ajouté le modèle numérique. Dans la suite de la description ce flux vidéo est appelé flux vidéo enrichi, les images de ce flux sont appelées showroom augmenté.

Une première partie de la description illustre le procédé et les dispositifs selon l'invention pour visualiser une maquette numérique dans un environnement réel. Une seconde partie indique comment ce procédé et ces dispositifs sont utilisés pour visualiser des enrichissements virtuels ajoutés à une maquette réelle.

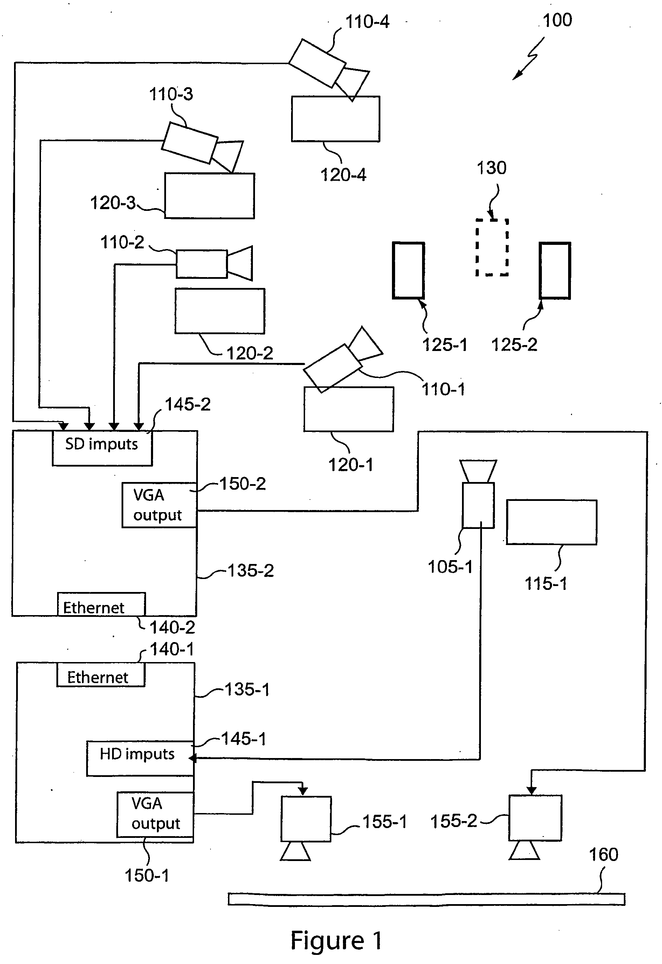

La figure 1 illustre de façon schématique un exemple de dispositif 100 selon l'invention. Dans cet exemple, le showroom est filmé par une caméra haute définition 105-1 et par quatre caméras 110-1 à 110-4 ayant des définitions standard. La caméra haute définition peut avoir l'une des définitions préconisées par la norme HD, par exemple 1920 points par 1080 lignes. Les caméras standard peuvent être de qualité PAL avec une acquisition en temps réel de 768 points par 576 lignes. Un dispositif de capture de mouvement, ou capteur de mouvement, peut être associé à chaque caméra. Dans cet exemple un capteur de mouvement 115-1 est associé à la caméra 110-1 et les capteurs de mouvement 120-1 à 120-4 sont associés aux caméras 110-1 à 110-4, respectivement.

Chaque capteur de mouvement est solidaire de la caméra à laquelle il est associé. Les capteurs de mouvement sont choisis selon la nature des mouvements possibles des caméras auxquelles ils sont associés. Par exemple, les capteurs de mouvement sont du type azimut/élévation/zoom pour les caméras ayant trois degrés de liberté (rotation horizontale, rotation verticale et zoom) ou du type x/y/z/cap/tangage/roulis pour les caméras ayant six degrés de liberté (déplacement selon l'axe des x, y et z, rotation horizontale, rotation verticale et inclinaison).

Les caméras filment le showroom, c'est-à-dire l'espace dans lequel doit être présenté la maquette numérique. Le showroom peut comprendre des objets réels, par exemple les objets 125-1 et 125-2. La référence 130 représente l'emplacement de la maquette numérique.

Les distorsions optiques et le champ de vision des caméras 105-1 et 110-1 à 110-4 sont calculés avant l'installation des caméras dans le showroom.

Les caméras et les capteurs de mouvement sont reliés à un calculateur. Les caméras sont de préférence connectées à une carte d'acquisition vidéo du calculateur et les capteurs de mouvement sont connectés à un port de communication du calculateur. Dans l'exemple de la figure 1, la caméra haute définition 105-1 et le capteur de mouvement 115-1 sont relié à un premier calculateur 135-1, les caméras 110-1 à 110-4 ainsi que les capteurs de mouvement 120-1 à 120-4 sont reliés à un premier calculateur 135-2. Ici, les calculateurs sont des ordinateurs personnels standard (*Personal Computer,* PC).

Chaque ordinateur personnel 135-1 ou 135-2 comprend de préférence un port Ethernet 140-1 et 140-2, respectivement, permettant aux ordinateurs personnel d'échanger des informations entre eux. Chaque ordinateur personnel comprend également une carte d'acquisition vidéo et un port de communication (non représenté). Dans cet exemple, l'ordinateur personnel 135-1 comprend une carte d'acquisition haute définition 145-1. A l'heure actuelle, une seule carte d'acquisition haute définition peut être insérée dans un ordinateur personnel en raison des limites de bande passante imposées par la carte mère. Dans l'avenir, plusieurs cartes d'acquisition haute définition ou une carte d'acquisition haute définition et plusieurs cartes d'acquisition standard pourront être utilisées au sein d'un même ordinateur personnel et ainsi, un seul ordinateur personnel pourra remplacer les ordinateurs personnels 135-1 et 135-2. L'ordinateur personnel 135-2 comprend quatre cartes d'acquisition standard partageant la référence 145-2. La connexion entre les caméras 110-1 à 110-4 et les cartes d'acquisition 145-2 peut être une liaison vidéo composite ou SVidéo. Les cartes d'acquisition haute définition ou standard peuvent être connectés aux ordinateurs personnels via le bus PCI.

Les ordinateurs personnels 135-1 et 135-2 comprennent chacun une carte graphique 150-1 et 150-2, respectivement, par exemple une carte graphique avec accélération 3D comme les cartes ATI X800, ATI 1800XL, ou NVidia 7900GTX, avec par exemple une sortie du type VGA. La sortie de ces cartes graphiques peut être relié à un moniteur (non représenté) et/ou à un projecteur vidéo. Dans cet exemple, la sortie de la carte graphique 150-1 de l'ordinateur personnel 135-1 est relié au projecteur vidéo 155-1 et la sortie de la carte graphique 150-2 de l'ordinateur personnel 135-2 est relié au projecteur vidéo 155-2. Les flux vidéo générés par les ordinateurs individuels 135-1 et 135-2, ou flux vidéo enrichis, peuvent être présentés simultanément sur un (ou plusieurs) écran de projection 160. Alternativement, un seul flux vidéo enrichi peut être présenté. De la même manière les quatre flux vidéo générés par l'ordinateur individuel 135-2 à partir des quatre caméras 110-1 à 110-4 peuvent être visualisés simultanément ou non. Le nombre de flux vidéo et la taille de visualisation sont choisis par l'utilisateur.

Le rôle principal des ordinateurs individuels 135-1 et 135-2 est d'acquérir le flux vidéo représentant le showroom, d'y ajouter la maquette numérique selon la position des caméras et de transmettre en temps réel le flux vidéo enrichi à un projecteur. Pour enrichir les flux vidéo issus des caméras, les ordinateurs personnels peuvent utiliser le logiciel D'FUSION de la société TOTAL IMMERSION conçu pour des applications de réalité augmentée par l'insertion en temps réel d'objet 3D dans des flux vidéo.

Idéalement, la résolution des images du flux vidéo enrichi correspond à la résolution native du projecteur vidéo utilisé pour les afficher. La résolution des images du flux vidéo enrichi peut être modifiée pour être adaptée à la résolution native du projecteur vidéo utilisé pour les afficher en utilisant la technique de redimensionnement de texture de haute qualité disponible sur la carte graphique, telle qu'un filtrage bilinéaire.

La maquette numérique est de préférence réalisée à l'aide d'un logiciel de Conception Assistée par Ordinateur (CAO), ou modeleurs, standard du marché. Le fichier est converti au format interne du logiciel D'FUSION, par exemple le format directX. Il est également possible d'importer les modèles numériques des objets réels qui doivent être présents dans le showroom augmenté afin de gérer les problèmes d'occultation. Le modèle numérique peut ainsi être visualisé de façon à ce qu'il soit partiellement ou totalement occulté par les éléments réels, en fonction de la position de la caméra. Lors du rendu de la scène, le modèle numérique de l'objet virtuel à afficher dans le showroom réel ainsi que les modèles numériques correspondant aux objets réels présents dans le showroom (par exemple 125-1 et 125-2) sont connus. Les modèles numériques correspondant aux objets réels ne sont pas tracés de façon visible dans l'image, mais ils apportent leur contribution en ce qui concernent l'information de profondeur (Z-buffer) dans la carte graphique. Grâce à cette contribution, l'objet virtuel peut être partiellement ou totalement masqué par les objets réels. Le modèle 3D texturé de la maquette numérique, animé si besoin, et les modèles 3D des objets réel présents dans le showroom sont de préférence mémorisés, par exemple sur le disque dur des ordinateurs personnels 135-1 et 135-2. Les animations de la maquette numérique peuvent être du type rotation, translation, changement d'échelle et/ou affichage filaire. Le tracé de la maquette numérique est, de préférence, à la résolution native du projecteur vidéo utilisé pour afficher les images du flux vidéo enrichi.

Lors de la mise en place du dispositif, un objet réel est de préférence installé à l'emplacement de la maquette numérique dans le showroom. La taille de cet objet réel est de préférence similaire celle de la maquette numérique, à défaut, les proportions de cet objet réel sont similaires à celle de la maquette numérique pour une plus grande précision d'affichage de l'objet virtuel dans le monde réel. Cet objet réel a été préalablement modélisé et le fichier CAO associé qui le représente est utilisé pour calibrer le dispositif. Cet objet réel peut être, par exemple, un cube ou un parallélépipède, idéalement réalisé dans un matériau faiblement dilatable. Pour chaque caméra un outil de localisation est utilisé afin d'apparier des points caractéristiques de l'objet réel installé à l'emplacement de la maquette numérique avec les points correspondants du modèle numérique de cet objet réel. Cela permet d'obtenir, pour chaque caméra, sa position et son orientation (x/y/z/roulis/tangage/piqué) dans un repère absolu lié à l'objet réel. Toutes les caméras sont ainsi localisées dans le même repère absolu.

Le logiciel D'FUSION permet d'intégrer parfaitement la maquette numérique dans les images issues de chaque caméra, en temps réel. Au démarrage, le logiciel peut charger plusieurs maquettes numériques. Il est alors possible de choisir séquentiellement l'affichage d'une maquette numérique parmi celles qui ont été chargées. Pour la maquette numérique sélectionnée, il est possible de changer le matériau e.g., la texture où la couleur, la position et/ou l'orientation. Il est également possible de présenter des animations comme, par exemple, l'ouverture d'une portière d'une maquette numérique de voiture.

Pour gérer les reflets de l'environnement sur la maquette numérique, il est possible de réaliser une texture d'environnement statique. Deux méthodes peuvent être utilisées,
- le showroom (murs, sols et plafonds) est modélisé puis la texture d'environnement est calculée en utilisant un modeleur standard avec des paramètres de caméra à 180 degrés (« *environment mapping »* sphérique ou cubique) ; ou,
- une sphère réfléchissante est disposée dans le showroom à l'emplacement prévu de la maquette numérique et une photo est prise. Cette photo est utilisée comme « *environment map »* sphérique.

La texture d'environnement statique est déterminée durant une phase d'initialisation ou d'installation. Cette texture est appliquée à la maquette numérique quelque soit les événements liés au showroom. En particulier si un objet réel ou une personne présent sur le showroom bouge, cela n'aura pas d'effet sur les reflets générés sur la maquette numérique.

Pour pallier cet inconvénient, le procédé et les. dispositifs selon l'invention sont adaptés à gérer dynamiquement les reflets qui sont appliqués sur la maquette numérique. Une caméra vidéo est installée dans le showroom à l'emplacement de la maquette numérique (130). Cette caméra est de préférence fixée au sol, dirigée vers le haut i.e., pour filmer vers le haut. Elle est équipée d'une optique grand angle, ou *fish eye.* Le flux vidéo issu de cette caméra est transmis aux ordinateurs personnels 135-1 et 135-2. Il est utilisé pour mettre à jour la texture d'environnement en temps réel. Cela permet, par exemple, de se voir réfléchi par la maquette numérique, et de voir les changements de reflets lorsque l'on se déplace ou que l'on modifie le contenu ou la position des objets proches de la maquette numérique.

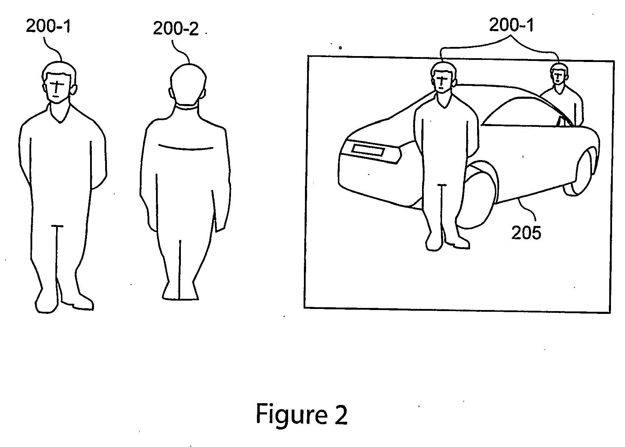

Il est possible d'afficher des personnages dans le showroom augmenté, à l'échelle 1 par rapport à la maquette numérique et donc par rapport aux objets réels si l'échelle de la maquette numérique a été adaptée à celle des objets réels. La méthode pour insérer des personnages'dans le showroom augmenté consiste à photographier les personnes, de préférence de face et de dos, et à détourer les personnes sur ces photos. Le détourage de la photo peut être obtenu en modifiant la photo pour obtenir une image du personnage sur un fond de couleur uniforme, par exemple un fond vert. Lors de l'utilisation de cette image, le logiciel D'FUSION n'affiche que les pixels n'étant pas de la couleur du fond e.g., vert, à l'aide de la fonction *pixel shader.* Alternativement, la photo du personnage est transmise au logiciel D'FUSION avec une autre bitmap contenant l'information d'alpha, c'est-à-dire l'information codée en niveau de gris permettant à la carte graphique utilisée de décider, pour chaque pixel, s'il doit être tracé ou non. La photo est utilisée pour texturer un objet 3D qui peut être, par exemple, un simple rectangle. Cet objet 3D est positionné en temps réel dans le showroom augmenté de façon perpendiculaire à l'axe optique de la caméra dont est issu le flux vidéo utilisé pour générer les images du showroom augmenté, de face ou de dos selon l'angle de la caméra. La figure 2 illustre cette méthode. Les références 200-1 et 200-2 présentent le résultat du détourage des photos prises de face et de dos d'une personne, respectivement. La scène de droite illustre le showroom augmenté comprenant la maquette numérique d'une voiture 205 avec la photo de la même personne présentée devant (à gauche) et derrière (à droite) la maquette numérique de la voiture. L'objet 3D associé à la photo détourée 200-1 est occulté par la maquette numérique ou occulte la maquette numérique selon sa position.

Lors de la visualisation du showroom augmenté, il est possible de passer de la vue d'une caméra à une autre, par exemple en utilisant le clavier des ordinateurs personnels 135-1 et 135-2. Si les caméras sont mobiles et motorisées, il peut également être possible de contrôler leur déplacement, leur orientation et/ou leur facteur de zoom en utilisant, par exemple, la souris, le clavier ou un autre dispositif de pointage tel qu'un joystick connecté aux ordinateurs personnels 135-1 et 135-2. Des sources lumineuses virtuelles peuvent être ajoutées au showroom augmenté et peuvent être réglées en temps réel pour être harmonisées avec les éclairages réels du showroom. Les modèles 3D des objets réels présents dans le showroom sont utilisés pour occulter la maquette numérique selon la position de ces objets dans le showroom.

Le procédé et les dispositifs selon l'invention permettent également d'utiliser la réalité augmentée pour ajouter des enrichissements virtuels sur une maquette réelle et ainsi augmenter le nombre de tests possible tout en diminuant les coûts et les délais. Se référant à la figure 1, les objets réels 125-1 et 125-2 peuvent représenter deux parties d'une maquette réelle auxquelles l'utilisateur souhaite ajouter des enrichissements virtuels. Naturellement, les enrichissements virtuels peuvent être positionné sur ou à côté d'un ou de plusieurs objets réels sans changer la nature du procédé et des dispositifs selon l'invention.

De préférence, le modèle numérique de la maquette réelle est réalisé à l'aide d'un logiciel de CAO, ou modeleurs, standard du marché et importé au format interne du logiciel D'FUSION, par exemple au format directX. Ce modèle numérique 3D est de préférence mémorisé sur le disque dur des ordinateurs personnels utilisés (les textures de ce modèle ne sont pas nécessaire). Les modèles numériques des enrichissements virtuels devant être ajoutés à la maquette réelle peuvent également être réalisé à l'aide d'un logiciel de CAO, importé au format interne du logiciel D'FUSION et stocké sur un disque dur. Le tracé des enrichissements virtuels est, de préférence, à la résolution native du projecteur vidéo utilisé pour afficher les images du flux vidéo enrichi, comportant ces enrichissements virtuels. Comme en ce qui concerne les maquettes numériques présentées précédemment, les enrichissements virtuels peuvent être animés (rotation, translation, changement d'échelle et/ou affichage filaire).

La position exacte des caméras est déterminée en appariant des points caractéristique de la maquette réelle avec les points correspondants du modèle numérique. Les reflets sont gérés de la même façon que pour la visualisation des maquettes numériques.

Lorsque les enrichissements virtuels sont affichés, il est possible de sélectionner chacun d'eux, de les afficher ou de les faire disparaître, de changer leur position, de changer leur orientation et/ou de changer leur texture.

L'invention permet de visualiser une maquette numérique dans un environnement réel, ou showroom, ou de visualiser des enrichissements virtuels d'une maquette réelle. Outre la gestion dynamique des reflets générés par le showroom sur la maquette numérique ou les enrichissements virtuels, les innovations apportées par l'invention présentent les avantages suivants,
- la gestion dynamique des reflets du monde extérieur sur la maquette numérique ou sur les enrichissements virtuels peut être combinée avec la gestion statique de ces reflets en combinant plusieurs mappings d'environnement (le degré d'influence de chaque mapping peut être donné par un paramètre variant, par exemple, entre 0 et 1) ;
- plusieurs caméras peuvent être utilisées pour visualiser la maquette numérique ou les enrichissements virtuels sous des angles différents ;
- les caméras utilisées pour visualiser la maquette numérique ou les enrichissements virtuels dans le showroom peuvent être statiques ou mobiles, leur focale peut être variable ;
- l'image enrichie, c'est-à-dire composée d'objets réels et d'objets virtuels est présentée en temps réel i.e., la visualisation du showroom comprenant la maquette numérique ou les enrichissements virtuels est simultanée à la prise de vue du showroom ;
- la maquette numérique ou les enrichissements virtuels peuvent être animés en temps réel ;
- la position de la maquette numérique ou les enrichissements virtuels ainsi que leur orientation dans le showroom peuvent être modifiées en temps réel ;
- le showroom peut comprendre des objets réels, en particulier des objets réels devant être comparés à la maquette ; vue depuis chaque caméra, la maquette numérique ou les enrichissements virtuels peuvent être partiellement ou totalement occultés par des objets réels ;
- la position des objets réels dans le showroom ainsi que leur orientation peuvent être modifiées en temps réel ;
- le showroom peut comprendre des personnes physiques ;
- le dispositif selon l'invention peut être connecté à un système de visioconférence pour transmettre les images composées en temps réel vers un autre site ; et,
- le dispositif selon l'invention peut utiliser des caméras haute définition.

Naturellement, pour satisfaire des besoins spécifiques, une personne compétente dans le domaine du traitement d'image et de la réalité augmentée pourra appliquer des modifications dans la description précédente pour satisfaire ses besoins.

## Revendications

1. Procédé pour visualiser en temps réel un objet virtuel en trois dimensions dans un environnement réel par des ordinateurs personnels, en comprenant les étapes suivantes :
- réception d'au moins un flux vidéo comprenant une représentation d'au moins un objet réel ;
- insertion en temps réel d'une représentation en deux dimensions dudit objet virtuel en trois dimensions dans ledit au moins un flux vidéo reçu ;
- occultation dudit objet virtuel partiellement ou totalement par l'au moins un objet réel, où le modèle numérique de l'au moins un objet réel est connu et apporte sa contribution en ce qui concerne l'information de profondeur dans le Z-buffer de la carte graphique de l'ordinateur personnel, le modèle numérique n'étant lui-même pas tracé de façon visible dans l'image, et création d'au moins un flux vidéo enrichi comprenant ledit au moins un flux vidéo reçu dans lequel ladite représentation en deux dimensions dudit objet virtuel en trois dimensions a été insérée ;
- réception d'un flux vidéo d'un second type, ledit au moins un flux vidéo étant au moins un flux vidéo de premier type, ledit flux vidéo d'un second type permettant de déterminer dynamiquement les reflets dudit environnement réel sur ledit objet virtuel en trois dimensions ;
- réalisation d'une texture d'environnement statique permettant de gérer statiquement les reflets ;
- mise à jour d'une texture d'environnement en temps réel à partir dudit flux vidéo de second type ;
- combinaison de la gestion dynamique des reflets avec la gestion statique de ces reflets par combinaison de plusieurs mappings d'environnement selon un degré d'influence de chaque mapping ; et
- transmission dudit au moins un flux vidéo enrichi.

2. Procédé selon la revendication 1, dans lequel la dite mise à jour permet de voir les changements de reflet sur ledit objet virtuel dus à des modifications de son environnement.

3. Procédé selon la revendication 2, dans lequel lesdites modifications sont dues au moins un l'un parmi :
- un déplacement de l'observateur par rapport audit objet virtuel, et
- une modification de la position ou du contenu des objets proches dudit objet virtuel.

4. Procédé selon l'une des revendications 1 à 3 **caractérisé en ce que** le degré d'influence de chaque mapping est donné par un paramètre variable entre 0 et 1.

5. Procédé selon l'une des revendications 1 à 4 **caractérisé en ce que** ledit au moins un flux vidéo comporte la représentation d'au moins un objet réel et **en ce que** l'occultation d'une partie dudit objet virtuel par ledit au moins un objet réel est déterminée par un modèle tridimensionnel associé audit au moins un objet.

6. Procédé selon l'une des revendications 1 à 5 **caractérisé en ce que** ledit flux vidéo d'un second type modifie la texture d'environnement dudit objet virtuel en trois dimensions.

7. Procédé selon l'une quelconque des revendications précédentes **caractérisé en ce que** ledit objet virtuel est une maquette numérique.

8. Procédé selon l'une des revendications 1 à 6 **caractérisé en ce que** ledit objet virtuel est un enrichissement virtuel d'une maquette réelle présente dans ledit environnement réel.

9. Procédé selon l'une quelconque des revendications précédentes caractérisé en qu'il comprend en outre l'étape de réception d'au moins un flux de données associé audit au moins un flux vidéo de premier type, ledit au moins un flux de données caractérisant les mouvements de la source du flux vidéo associé, ladite représentation en deux dimensions dudit objet virtuel en trois dimensions étant inséré en temps réel dans ledit au moins un flux vidéo reçu selon ledit au moins un flux de données.

10. Procédé selon l'une quelconque des revendications précédentes caractérisé en que ledit objet virtuel en trois dimensions est animé.

11. Procédé selon l'une quelconque des revendications précédentes **caractérisé en ce que** l'étape d'insertion en temps réel d'une représentation en deux dimensions dudit objet virtuel en trois dimensions dans ledit au moins un flux vidéo reçu comprend en outre l'étape d'insertion en temps réel d'un objet virtuel en deux dimensions dans ledit au moins un flux vidéo reçu.

12. Procédé selon la revendication 11 **caractérisé en ce que** ledit objet virtuel en deux dimensions est une représentation d'un personnage réel.

13. Procédé selon l'une quelconque des revendications précédentes **caractérisé en ce que** ledit environnement réel comprend au moins un objet réel et **en ce que** ce procédé comprend en outre l'étape d'apparier une pluralité de points remarquable dudit objet réel avec les points correspondants d'un modèle virtuel dudit objet réel.

14. Procédé selon la revendication 13 **caractérisé en ce qu'**il comprend en outre l'étape de localiser la source dudit au moins un flux vidéo reçu.

15. Procédé selon la revendication 13 ou la revendication 14 caractérisé en qu'il comprend en outre l'étape de mise à l'échelle dudit objet virtuel en trois dimensions selon ledit au moins un objet réel.

16. Dispositif comprenant des moyens adaptés à la mise en oeuvre de chacune des étapes du procédé selon les revendications 1 à 15.

17. Programme d'ordinateur comprenant des instructions adaptées à la mise en oeuvre de chacune des étapes du procédé selon les revendications 1 à 15.

## Patentansprüche

1. Ein Verfahren zur Visualisierung in Echt-Zeit eines dreidimensionalen, virtuellen Objekts in einer realen Umgebung durch Personalcomputer bzw. PCs, das die folgenden Schritte aufweist:
- Empfang wenigstens eines Video-Streams bzw. Videostroms, der eine Darstellung wenigstens eines realen Objektes aufweist;
- Einfügen, in Echt-Zeit, einer zweidimensionalen Darstellung des dreidimensionalen virtuellen Objektes in den wenigstens einen empfangenen Videostrom;
- teilweises oder vollständiges Maskieren des virtuellen Objektes durch das wenigstens eine reale Objekt, wobei das digitale Modell des wenigstens einen realen Objektes bekannt ist und seinen Beitrag leistet in Bezug auf die Tiefeninformation in dem Z-Puffer der Grafikkarte des PCs, wobei das digitale Modell selbst in dem Bild nicht sichtbar ist, und Erzeugung wenigstens eines erweiterten Videostroms, der den wenigstens einen empfangenen Videostrom aufweist, in den die zweidimensionale Darstellung des dreidimensionalen virtuellen Objekts eingefügt worden ist;
- Empfang eines Videostroms eines zweiten Typs, wobei der wenigstens eine Videostrom wenigstens ein Videostrom des ersten Typs ist, wobei der Videostrom eines zweiten Typs ermöglicht, dynamisch die Reflexionen der realen Umgebung auf dem dreidimensionalen virtuellen Objekt zu bestimmen;
- Produktion einer statischen Umgebungstextur bzw. -beschaffenheit, die es ermöglicht, Reflexionen statisch zu handhaben;
- Aktualisierung einer Umgebungstextur in Echt-Zeit basierend auf dem Videostrom eines zweiten Typs;
- Kombination der dynamischen Handhabung der Reflexionen mit der statischen Handhabung dieser Reflexionen durch Kombinieren einer Vielzahl von Umgebungsabbildungen gemäß einem Grad an Einfluss jeder Abbildung; und
- Sendung des wenigstens einen erweiterten Videostroms.

2. Verfahren nach Anspruch 1, wobei die Aktualisierung es ermöglicht, Veränderungen der Reflexion auf dem virtuellen Objekt aufgrund von Modifikationen der Umgebung davon zu sehen.

3. Verfahren nach Anspruch 2, wobei die Modifikationen aufgrund von wenigstens einem von Folgendem sind:
- einer Verlagerung des Betrachters relativ zu dem virtuellen Objekt; und
- einer Modifikation bzw. Veränderung der Position oder der Inhalte der Objekte in der Nähe des virtuellen Objekts.

4. Verfahren nach einem der Ansprüche 1 bis 3, **dadurch gekennzeichnet, dass** der Grad an Einfluss jeder Abbildung durch einen Parameter gegeben ist, der zwischen 0 und 1 variiert.

5. Verfahren nach einem der Ansprüche 1 bis 4, **dadurch gekennzeichnet, dass** der wenigstens eine Videostrom die Darstellung wenigstens eines realen Objektes aufweist und dass die Maskierung eines Teils des virtuellen Objekts durch das wenigstens eine reale Objekt bestimmt wird durch ein dreidimensionales Modell, das mit dem wenigstens einem Objekt assoziiert ist.

6. Verfahren nach einem der Ansprüche 1 bis 5, **dadurch gekennzeichnet, dass** der Videostrom eines zweiten Typs die Umgebungstextur des dreidimensionalen virtuellen Objekts modifiziert.

7. Verfahren nach einem der vorhergehenden Ansprüche, **dadurch gekennzeichnet, dass** das virtuelle Objekt ein digitales Modell bzw. Mock-Up ist.

8. Verfahren nach einem der Ansprüche 1 bis 6, **dadurch gekennzeichnet, dass** das virtuelle Objekt eine virtuelle Erweiterung eines realen Modells ist, das in der realen Umgebung vorliegt.

9. Verfahren nach einem der vorhergehenden Ansprüche, **dadurch gekennzeichnet, dass** es weiter den Schritt des Empfangs wenigstens eines Datenstroms aufweist, der mit dem wenigstens einen Videostrom eines ersten Typs assoziiert ist, wobei der wenigstens eine Datenstrom Bewegungen der Quelle des assoziierten Videostroms charakterisiert, wobei die zweidimensionale Darstellung des dreidimensionalen virtuellen Objektes in Echt-Zeit in den wenigstens einen empfangenen Videostrom gemäß dem wenigstens einen Datenstrom eingefügt wird.

10. Verfahren nach einem der vorhergehenden Ansprüche, **dadurch gekennzeichnet, dass** das dreidimensionale virtuelle Objekt animiert ist.

11. Verfahren nach einem der vorhergehenden Ansprüche, **dadurch gekennzeichnet, dass** der Schritt des Einfügens einer zweidimensionalen Darstellung des dreidimensionalen virtuellen Objektes in Echt-Zeit in den wenigstens einen empfangenen Videostrom weiter den Schritt des Einfügens, in Echt-Zeit, eines zweidimensionalen virtuellen Objektes in den wenigstens einen empfangenen Videostrom aufweist.

12. Verfahren nach Anspruch 11, **dadurch gekennzeichnet, dass** das zweidimensionale, virtuelle Objekt eine Darstellung einer realen Person ist.

13. Verfahren nach einem der vorhergehenden Ansprüche, **dadurch gekennzeichnet, dass** die reale Umgebung wenigstens ein reales Objekt aufweist, und dadurch, dass dieses Verfahren weiter den Schritt des Abgleichens einer Vielzahl von Merkmalspunkten des realen Objektes mit entsprechenden Punkten eines virtuellen Modells des realen Objektes aufweist.

14. Verfahren nach Anspruch 13, **dadurch gekennzeichnet, dass** es weiter den Schritt des Ortens der Quelle des wenigstens einen empfangenen Videostroms aufweist.

15. Verfahren nach Anspruch 13 oder Anspruch 14, **dadurch gekennzeichnet, dass** es weiter den Schritt des Skalierens des dreidimensionalen virtuellen Objekts gemäß dem wenigstens einen realen Objekt aufweist.

16. Eine Einrichtung, die Mittel aufweist, die ausgelegt sind zum Ausführen jedes der Schritte des Verfahrens der Ansprüche 1 bis 15.

17. Ein Computerprogramm, das Instruktionen aufweist, die ausgelegt sind zum Durchführen jedes der Schritte des Verfahrens der Ansprüche 1 bis 15.

## Claims

1. A method for visualization in real time of a three-dimensional virtual object in a real environment by personal computers, comprising the followings steps:
- reception of at least one video stream comprising a representation of at least one real object;
- insertion in real time of a two-dimensional representation of said three-dimensional virtual object into said at least one received video stream;
- mask the virtual object partially or totally by the at least one real object, wherein the digital model of the at least one real object is known and makes its contribution in relation to the depth information in the Z-buffer on the graphics card of the personal computer, wherein the digital model itself is not visible in the image, and creation of at least one augmented video stream comprising said at least one received video stream into which said two-dimensional representation of said three-dimensional virtual object has been inserted;
- reception of a video stream of a second type, said at least one video stream being at least one video stream of first type, said video stream of a second type enabling to dynamically determine the reflections of said real environment on said three-dimensional virtual object;
- production of a static environment texture enabling to statically manage said reflections;
- update of an environment texture in real time based on said video stream of a second type;
- combination of the dynamic management of the reflections with the static management of these reflections by combining a plurality of environment mappings according to a degree of influence of each mapping; and
- transmission of said at least one augmented video stream.

2. The method of claim 1, wherein said update enables to see the changes of reflection on said virtual object due to modifications of the environment thereof.

3. The method of claim 2, wherein said modifications are due to at least one of the following:
- a displacement of the observer relative to said virtual object, and
- a modification of the position or of the contents of the objects close to said virtual object.

4. The method of any of claims 1 to 3, **characterized in that** the degree of influence of each mapping is given by a parameter varying between 0 and 1.

5. The method of any of claims 1 to 4, **characterized in that** said at least one video stream comprises the representation of at least one real object and **in that** the masking of a part of said virtual object by said at least one real object is determined by a three-dimensional model associated with said at least one object.

6. The method of any of claims 1 to 5, **characterized in that** said video stream of a second type modifies the environment texture of said three-dimensional virtual object.

7. The method of any of the foregoing claims, **characterized in that** said virtual object is a digital mock-up.

8. The method of any of claims 1 to 6, **characterized in that** said virtual object is a virtual augmentation of a real mock-up present in said real environment.

9. The method of any of the foregoing claims, **characterized in that** it further comprises the step of reception of at least one data stream associated with said at least one video stream of first type, said at least one data stream characterizing the movements of the source of the associated video stream, said two-dimensional representation of said three-dimensional virtual object being inserted in real time into said at least one received video stream in accordance with said at least one data stream.

10. The method of any of the foregoing claims, **characterized in that** said three-dimensional virtual object is animated.

11. The method of any of the foregoing claims, **characterized in that** the step of insertion in real time of a two-dimensional representation of said three-dimensional virtual object into said at last one received video stream further comprises the step of insertion in real time of a two-dimensional virtual object into said at least one received video stream.

12. The method of claim 11, **characterized in that** said two-dimensional virtual object is a representation of a real person.

13. The method of any of the foregoing claims, **characterized in that** said real environment comprises at least one real object and **in that** this method further comprises the step of matching a plurality of feature points of said real object with the corresponding points of a virtual model of said real object.

14. The method of claim 13, **characterized in that** it further comprises the step of locating the source of said at least one received video stream.

15. The method of claim 13 or claim 14, **characterized in that** it further comprises the step of scaling said three-dimensional virtual object according to said at least one real object.

16. A device comprising means adapted for carrying out each of the steps of the method of claims 1 to 15.

17. A computer program comprising instructions adapted for carrying out each of the steps of the method of claims 1 to 15.
